# EUROPÄISCHE PATENTSCHRIFT

(11) **EP 2 707 302 B1**
(45) Veröffentlichungstag und Bekanntmachung des Hinweises auf die Patenterteilung: **06.01.2021**
(21) Anmeldenummer: 12719951.1
(22) Anmeldetag: 02.05.2012
(51) Int. Cl.: B65D 41/04, B65D 53/04

(54) **DICHTSCHEIBE MIT LASCHE**
SEALING DISC COMPRISING A TAB
RONDELLE D'ÉTANCHÉITÉ MUNIE D'UNE LANGUETTE

(30) Priorität: 12.05.2011 DE 102011101424; 05.07.2011 DE 102011106768
(43) Veröffentlichungstag der Anmeldung: 19.03.2014
(73) Patentinhaber: Alfelder Kunststoffwerke Herm. Meyer GmbH, 31061 Alfeld/Leine (DE)
(72) Erfinder: WIENING, Heinz-rudolf, 31061 Alfeld OT Gerzen (DE)
(74) Vertreter: Einsel, Martin
(86) Internationale Anmeldenummer: PCT/EP2012/058009
(87) Internationale Veröffentlichungsnummer: WO 2012/152622

(56) Entgegenhaltungen:
- EP-A1- 1 454 840
- EP-A1- 1 837 288
- EP-A1- 2 230 190
- WO-A1-2010/115811
- DE-A1- 19 920 586

## Beschreibung

Die Erfindung betrifft eine Dichtscheibe für einen Behälterverschluss zur Verwendung bei einem Behälter mit einer durch einen umlaufenden Rand begrenzten Mündung, bei der die Dichtscheibe aus mehreren Schichten mit einem Rand besteht, von denen zumindest eine Gruppe aus Schichten die Mündung des Behälters vor einer Erstöffnung des Behälters dicht verschließt, bei der eine der Schichten eine metallische, durch Induktion erwärmbare Schicht ist, bei der die anderen Schichten nichtmetallische, durch Induktion nicht unmittelbar erwärmbare Schichten sind, bei der die Gruppe der Schichten mittels einer Siegelschicht auf dem umlaufenden Rand der Mündung aufsiegelbar ist, bei der die Dichtscheibe zumindest eine Grifflasche aufweist, bei der die Grifflasche nur von einer oder mehreren der Schichten aus der Gruppe der Schichten gebildet wird, und bei der die die Grifflasche bildenden Schichten den Rand der anderen Schicht der Gruppe flächenmäßig um die Fläche der Grifflasche überragen.

Behälter dienen zur Aufnahme von Inhalt, beispielsweise zur Aufnahme von Flüssigkeiten oder pulverförmigen Lebensmitteln oder anderen Substanzen. Die Behälter weisen eine Öffnung oder Mündung auf. Häufig ist es gewünscht oder auch erforderlich, diese Behältermündung mit einer scheibenförmigen Versiegelung zu verschließen, die den Inhalt dicht gegenüber äußeren Einflüssen abschließt.

Für das Erfordernis dieses dichten Abschlusses gibt es mehrere Gründe. Zum einen soll der Inhalt gegen störenden Einfluss von außen geschützt werden, beispielsweise gegen das Eindringen von Wasserdampf oder Sauerstoff, zum anderen soll er auch aromadicht bleiben. Einen weiteren Grund gibt es bei aggressiven Füllgütern, für die ein möglichst optimaler Leckageschutz gegeben sein muss. Schließlich kann durch einen solchen dichten Abschluss auch ein Originalitätsschutz für den Handel gegeben sein, da ein Benutzer sofort erkennen kann, ob bereits vorher jemand den Behälterinhalt manipuliert hat.

Zusätzlich wird die Behälteröffnung dann noch mit einer Schraubkappe oder einem ähnlichen Element verschlossen, das für die mechanische und stabile Verschließung der Behältermündung außerhalb der scheibenförmigen Versiegelung sorgt. Die scheibenförmige Versiegelung selbst ist dabei eine flexible dünne Folie. Beim erstmaligen Gebrauch nach dem Erwerb schraubt der Benutzer die Schraubkappe ab und zerstört die Folie, um an den Inhalt des Behälters zu gelangen. Danach verschließt er den Behälter erneut, sofern er noch nicht den gesamten Inhalt entnommen hat. Dieses erneute Verschließen geschieht, indem die Schraubkappe jetzt ohne die inzwischen zerstörte und entfernte Folie wieder auf ein entsprechendes Gegengewinde an der Behältermündung aufgeschraubt wird. Der Schraubverschluss kann gegebenenfalls den angebrochenen Inhalt verschließen, möglicherweise für einen nicht ebenso langen Zeitraum, wie die Originalverschlusskonfiguration, jedoch ebenfalls für einen den Verbraucher befriedigenden Zeitraum, den er ja von nun an selbst kontrollieren kann.

Die Folie, die den Behälterinhalt abschließt, wird, wie beispielsweise aus der EP 0 717 710 B1 bekannt, mittels Induktionsversiegelung aufgebracht. Dazu wird eine komplette Dichtscheibe aufgelegt, deren unterste Schicht die Siegelschicht bildet. Darüber liegt eine im Regelfall aus Aluminium bestehende metallische zweite Schicht, die der Wärmeeinkopplung und -übertragung beim Induktionsprozess dient und gegebenenfalls einen zusätzlichen mechanischen Schutz bildet. Die zweite Schicht ist mit der ersten fest und insbesondere für Wärmeübertragung gut leitend verbunden. Diese Schichten bilden eine Gruppe aus unteren Schichten. Oberhalb der erwähnten Aluminiumschicht sind dann gegebenenfalls noch weitere schichtförmige Bestandteile der Dichtscheibe vorgesehen, die beim Öffnen des Schraub- oder sonstigen Drehverschlusses in der Kappe verbleiben.

Ein ständiges Problem bei derartigen, an sich gut bewährten und zuverlässigen Verschlüssen ist die Erstöffnung durch den Benutzer beziehungsweise Verbraucher. Ein Zerstören dieser bei der Erstöffnung auf der Mündung des Behälters befindlichen Folie beziehungsweise Gruppe aus den unteren Schichten durch ein Messer oder auch durch die Finger des Benutzers ist zum einen nicht bei jedem Behälterinhalt möglich oder hygienisch und hinterlässt zum anderen auf dem Rand der Öffnung des Behälters Reste der Folie, die das spätere Ausgießen oder Ausschütten des Behälterinhaltes beeinträchtigen können.

Um das Öffnen für den Benutzer angenehmer und für die weitere Benutzung auch sicherer zu machen, stellt man dem Benutzer eine Handhabe zum Abziehen der Folie zur Verfügung. Diese Handhabe kann beispielsweise, wie in der DE 39 20 324 A1 und der EP 0 408 217 A1 vorgeschlagen, eine nach außen vorspringende Grifflasche sein, die dann also vom Benutzer außerhalb des Randes der Mündung des Behälters ergriffen und nach oben gezogen werden kann, so dass sich die gesamte Folie vom Behälterrand löst.

Diese recht einfache und an sich überzeugende Konzeption hat jedoch den Nachteil, dass die Grifflaschen beim Aufschrauben der Schraubkappe stören, da sie in dem Gewinde und der Schraubkappe in geeigneter Form untergebracht werden müssen. Dort steht zum einen wenig Raum zur Verfügung und zum anderen können diese Grifflaschen auch die Funktion des Schraubvorganges beeinträchtigen. Umgekehrt können durch den Schraubvorgang auch die Grifflaschen beschädigt oder im ungünstigsten Fall sogar die gesamte Dichtscheibe in ihrer Abdichtungsfunktion beeinträchtigt werden.

Zur Reduzierung der Probleme mit der in die Gewinde der Schraubkappen ragenden Grifflasche werden in Vorschlägen aus der EP 0 668 221 B1, der GB 2 330 134 A, der JP 2000-191021 A und der DE 10 2007 014 084 B3, die Dichtscheiben mit Grifflaschen ausgerüstet, bei denen die Dicke der Grifflasche geringer ist, als die Dicke der weiteren Flächenbereiche der Dichtscheibe. Dies wird dadurch erreicht, dass von den mehreren Schichten der Dichtscheibe nur eine oder wenige auch die Grifflasche bilden.

Dadurch, dass die Laschen der Dichtscheiben sehr dünn ausgebildet werden, sind sie weit flexibler in den verbleibenden Leerräumen innerhalb der Schraubkappe und des Schraubkappengewindes unterzubringen. Die Gefahr von gegenseitiger Störung der einzelnen Elemente beim Verschließen der Verpackung oder auch während des Öffnungsvorgangs ist damit erheblich reduziert.

Aus der EP 1 454 840 A1 ist eine Dichtungsanordnung mit im Wesentlichen kreisförmigen Dichtungselementen bekannt, die aus zwei Membranen besteht und die eine nach außen vorspringende Grifflasche aufweist. Das Dichtungselement soll vom Benutzer durch Ziehen der Grifflasche nach oben abgezogen werden.

Alternativ oder auch in Kombination zu dieser Ausbildung der Grifflasche mit geringerer Dicke ist es aus der EP 2 045 194 B1, der WO 2010/115811 A1 und der EP 2 230 190 A1 bekannt, die Grifflaschen nicht nach außen in das Gewinde ragen zu lassen, sondern stattdessen umzufalten und auf oder zwischen bestimmte Schichten der Dichtscheibe wieder einzuschieben. EP 2 230 190 A1 offenbart eine Dichtscheibe gemäß dem Oberbegriff des Anspruchs 1.

Dies hat allerdings andere Nachteile. Wie sich zeigt, werden bei einer solchen Faltung zurück in den Flächenbereich der Mündung auf die anderen Schichten der Dichtscheibe die Induktionsversiegelungseigenschaften des gesamten Dichtscheibenverbundes gestört. In einem Teilbereich der ansonsten kreissymmetrischen Anordnung liegt nämlich auf diese Weise eine doppelte Aluminiumschicht vor, was die Induktionseigenschaften erheblich verändert.

Die gleichen Nachteile entstehen in einer zweiten Ausführungsform aus der nachveröffentlichten EP 2 045 194 B1. Diese Ausführungsform legt die Grifflasche zunächst mit allen Schichten um 180° um auf die Oberseite der Dichtscheibe und faltet sie dann ein zweites Mal um 180° auf sich selbst. Dies hat darüber hinaus den Nachteil, dass in dem Bereich der Grifflasche die Aluminiumschicht dreifach aufeinander liegt und damit auch zu einer eklatanten Asymmetrie der Induktionseigenschaften führt.

Eine Asymmetrie der Induktionseigenschaften führt also im Ergebnis dazu, dass bei einer Versiegelung eines Behälters der Bereich der Grifflasche nicht so fest und sauber angesiegelt wird, wie die Dichtscheibe auf dem weiteren Umfang der Mündung des Behälters. Natürlich wird man versuchen, durch entsprechende Anordnungen der Induktionsvorrichtungen oder eine geschickte Ansteuerung dieses Problem anzugehen. Zum einen ist dies jedoch sehr aufwendig, zum Anderen bleibt das grundsätzliche Problem einer asymmetrischen Versiegelung bestehen. Insbesondere bleibt auch das Risiko, das zwar die Mehrzahl aller zu versiegelnden Behälter aufgrund dieser zusätzlichen Maßnahmen doch ordnungsgemäß versiegelt werden, dass jedoch in Einzelfällen eine höhere Wahrscheinlichkeit eines Aussetzers oder einer mangelhaften Ansiegelung besteht.

Das hat dann zur Folge, dass der Benutzer entweder auf ein bereits verdorbenes, weil nicht ordnungsgemäß in einem versiegelten Behälter gelagertes Produkt stößt, oder er jedenfalls den Eindruck hat, mit dem Produkt könnte zumindest etwas nicht in Ordnung sein oder jemand habe möglicherweise doch schon vor ihm an der Lasche gezogen, um das Produkt versuchsweise zu öffnen.

Dieses Verhalten beim Aufreißen des Behälters mittels einer Lasche wird von den Benutzern als unerfreulich und unzuverlässig empfunden und abgelehnt. Dabei ist zu berücksichtigen, dass ein Benutzer dann nicht nur in diesem Einzelfall verärgert ist, sondern seine Ablehnung generell auf die entsprechende Produktreihe des Abfüllers des Behälters erstreckt und möglicherweise vom Erwerb derartiger Waren in zukünftigen Fällen absieht, sodass dem Hersteller der Inhalte der zu verpackenden Behälter auch ein Image-Schaden entstehen kann.

Aufgabe der vorliegenden Erfindung ist es daher, eine Dichtscheibe vorzuschlagen, mit der die erwähnten Probleme weit möglichst vermieden werden können.

Diese Aufgabe wird erfindungsgemäß mit einer eingangs beschriebenen Dichtscheibe dadurch gelöst, dass eine andere aus der Gruppe der Schichten eine Schicht aus wärmedämmendem Material ist, dass die Schicht aus wärmedämmendem Material eine Schicht aus geschäumtem Kunststoff ist, dass diese Schicht so ausgebildet ist, dass die in der metallischen, durch Induktion erwärmbaren Schicht erzeugte Wärmeenergie nicht ausreicht, nach Hindurchtreten durch zwei Lagen der wärmedämmenden Schicht in der Siegelschicht ein Festkleben und Ansiegeln der Siegelschicht an einem darüber liegenden Element des Verschlusses des Behälters zu bewirken, dass die Grifflasche nur von dieser Schicht aus wärmedämmendem Material oder dass von dieser Schicht und einer oder mehreren der anderen, nichtmetallischen und durch Induktion nicht unmittelbar erwärmbaren Schichten gebildet wird, und dass die Grifflasche gefaltet und auf die oberste Schicht der Gruppe aus Schichten umgelegt ist.

Die Grifflasche selbst wird so ausgebildet, dass sie keine Aluminiumschicht enthält, obwohl die Aluminiumschicht eine der mehreren Schichten ist, aus denen die Dichtscheibe aufgebaut wird. Durch den Fortfall der Aluminiumschicht in der Grifflasche entfällt vollkommen die Problematik mit einer asymmetrischen Aufsiegelung, da für die Induktion die Dichtscheibe nun wieder rein kreissymmetrisch ist und die Grifflasche für diesen Aspekt des Vorgehens quasi nicht existiert. Das Weglassen der Aluminiumschicht widerstrebt dem Fachmann, denn er kann nun nicht mehr mit einer homogenen durchgängigen Materialbahn arbeiten, aus der er die Dichtscheiben mit den Grifflaschen ausstanzen könnte. Natürlich wird man bei der Herstellung nun nicht aus Grifflaschen einzelne Schichten herausschneiden, sondern von vorneherein vor dem Zuschneiden oder Ausstanzen der Dichtscheiben die einzelnen Schichten so zusammen kaschieren beziehungsweise so zusammenlaufen lassen, dass in einem bestimmten Bereich keine Aluminiumschicht vorgesehen ist.

Dadurch, dass die meisten Schichten der Dichtscheibe kontinuierlich in die Grifflasche weitergeführt werden, ist die Integrität des Gesamterzeugnisses gewahrt. Die Grifflasche ist nur unwesentlich dünner als die Dichtscheibe in ihren übrigen Flächenbereichen und das Fehlen der metallischen Schicht, die bevorzugt und insbesondere aus Aluminium besteht, im Bereich der Grifflasche kann ohne Weiteres hingenommen werden.

Durch das Enden der Aluminiumschicht im Inneren des Schichtenverbundes der Gruppe bilden sich allerdings kleine Stufen. Die Abmessungen dieser Stufen sind jedoch im Verhältnis zu den Gesamtabmessungen der Dichtscheibe außerordentlich gering. Dies lässt sich besonders dadurch einfach ausgleichen, dass eine der auf die metallische Schicht folgenden Schichten als elastische Schicht aufgebaut ist, insbesondere als aus einem geschäumten Kunststoff aufgebaute Schicht.

Die Schicht aus wärmedämmendem Material eine Schicht aus geschäumtem Kunststoff ist. Diese Schicht aus geschäumtem Kunststoff kann dann auch gleich die eben erwähnte elastische Schicht sein, die zum Ausgleich der Stufen genutzt wird.

Dabei hat es sich als besonders vorteilhaft herausgestellt, wenn diese Schicht aus einem EPE-Schaum (Expandiertes Polyethylen) besteht.

Wie sich herausgestellt hat, löst das Vorsehen dieser zusätzlichen Schicht aus einem geschäumten Kunststoff auch ein anderes ganz gravierendes Problem, das bisher eine wesentliche Beeinträchtigung beim Umlegen von Grifflaschen gewesen ist. Wie erwähnt, wird die Dichtscheibe mit einer Siegelschicht auf einem Behälterrand aufgesiegelt. Diese Siegelschicht ist bei Zimmertemperatur fest, sie entwickelt ihre klebenden Eigenschaften erst durch die Wärmezufuhr während des Induktionsvorgangs. Die Siegelschicht geht nun bei einer bahnförmigen Herstellung des Materials für die Dichtscheibe vollflächig durch und befindet sich mithin auch auf der Grifflasche. Wird nun die Grifflasche auf die Oberseite der obersten Schicht der Dichtscheibe umgelegt, so entwickelt sie im Stand der Technik ihre klebenden Eigenschaften auch an dieser Stelle während des Induktionsvorgangs, wodurch sie an dem Behälterdeckel oder auch an einem Resealteil oberhalb der Dichtscheibe festsiegeln kann. Um dies zu verhindern, müssen aufwendige Schritte unternommen werden, beispielsweise ein doppeltes Umlegen der Grifflasche wie in der EP 2 045 194 B1 beschrieben.

Gemäß der vorliegenden Erfindung jedoch zeigt sich, dass nun durch das Vorsehen einer zusätzlichen Schicht aus wärmedämmendem Material, insbesondere einer Schicht aus Kunststoffschaum, in der Grifflasche beim Umlegen dieser Grifflasche auf die oberste Schicht der Dichtscheibe anders als bei herkömmlichen Dichtscheiben ein erheblicher Abstand zwischen die Siegelschicht auf der nun vom Behälter wegweisenden und nach oben gerichteten Siegelschicht und der relativ nah an der Behältermündung liegenden metallischen Induktionsschicht entsteht. Während die Induktionsschicht in Richtung zum Behälter unmittelbar benachbart ist oder jedenfalls nur durch eine einzelne oder wenige dünne Schichten von der dortigen Siegelschicht getrennt ist und somit die Wärmeenergie direkt und in vollem Umfange dort auf die Siegelschicht einwirken kann, muss während des gleichen Induktionsvorganges die in der Induktionsschicht erzeugte Wärmeenergie nach oben durch zwei Lagen der wärmedämmenden, insbesondere der Schicht aus Kunststoffschaum, hindurch, bis sie in die dortige Siegelschicht auf der nun nach oben liegenden Grifflasche gelangt.

Das führt nun dazu, dass die Wärmeenergie nicht mehr ausreicht, um auch die Klebeigenschaften der Siegelschicht auf der Grifflasche hier noch entfalten zu lassen, sodass das sehr unerwünschte Festkleben und Ansiegeln der Siegelschicht an der Unterseite eines Deckels oder eines Resealteils vermieden werden kann.

Dieser Effekt ist darüber hinaus noch durch geeignete Wahl des elastischen Kunststoffschaummaterials und die entsprechende Auswahl der Dicke dieses Werkstoffes steuerbar, da dem Fachmann die bei dem Induktionsvorgang induzierte Wärmeenergie und das Wärmeleitungsverhalten in den verschiedenen Schichten vorab bekannt ist beziehungsweise von ihm entsprechend gewählt werden kann.

Es ist einleuchtend, dass dieser unterschiedliche und gravierend verschiedene Abstand der beiden in der Dichtscheibe vorhandenen Siegelschichten zu der metallischen Induktionsschicht trotz der natürlich identisch in der Induktionsschicht eingekoppelten Wärmeenergie zu einem unterschiedlichen Klebverhalten führt. Die entstehenden Lösung liegt für den Fachmann gleichwohl keineswegs auf der Hand, da es bisher stets das Bestreben war, die Grifflaschen eher möglichst dünn auszubilden, um eine Störung im Gewinde zu vermeiden. Außerdem entsteht naturgemäß eine entsprechende Aufdickung der Dichtscheibe im Bereich der Grifflasche, die aber in der bevorzugten Ausführungsform der Erfindung im Wesentlichen durch einen elastischen Charakter weniger störend ist.

Eine derartige Schicht hat auch den weiteren Vorteil, dass in der Dichtscheibe **auch Toleranzen aufgrund von Fertigungsungenauigkeiten der** Behältermündung oder des Deckels ausgeglichen werden können.

Die Schicht aus wärmedämmendem Material ist wie erwähnt eine Schicht aus Kunststoffschaum. Dieser hat insbesondere aufgrund seiner Elastizität erhebliche Vorteile. Alternativ in einem Beispiel, das nicht Teil der Erfindung ist, kann auch ein anderer Werkstoff eingesetzt werden, der die gewünschten wärmedämmenden Eigenschaften besitzt, beispielsweise Papier.

Dadurch, dass das metallische induktive Verhalten keinerlei Problem mehr darstellt, kann die Grifflasche ohne Weiteres auf die oberste Schicht der Gruppe der Schichten umgelegt werden, also so, dass sie bei einem Auflegen auf der Mündung des Behälters wieder in Richtung auf die Mitte der Mündung des Behälters zeigt.

Dies hat zunächst zur Folge, dass die Dichtscheibe vor ihrer Verwendung bei der den Behälter füllenden Unternehmung die Form einer herkömmlichen, kreisrunden, flachen Dichtscheibe hat und auch so behandelt werden kann. Eine besondere Ausrichtung auf dem Behälter ist nicht erforderlich, da die Dichtscheibe von außen symmetrisch ist.

Der Behälter muss zur Erstöffnung oder zu späteren Öffnungen durch den Benutzer auch nicht anders behandelt werden als bisher. Nach dem Aufschrauben des Schraubdeckels sieht der Betrachter auf die oberste Schicht der Gruppe, die auf der Öffnung des Behälters, also der Behältermündung, aufgesiegelt und diese in diesem Moment nach wie vor versiegelt und verschließt.

Allerdings liegt jetzt anders als bei bisherigen Konzepten oben auf der obersten Schicht der Gruppe für den Benutzer frei zugänglich eine Grifflasche mitten auf dem verbliebenen Teil der Dichtscheibe auf. Der Benutzer muss diese Grifflasche lediglich nehmen und an ihr ziehen, wozu er keinerlei weiterer Hinweise bedarf. Durch das Ziehen wird Kraft auf den Rand der Gruppe aus Schichten der Dichtscheibe ausgeübt, und zwar direkt auf die Siegelschicht.

Auf diesen Zug hin gibt die Siegelschicht sofort nach und der Zug an der Grifflasche hebt damit gleichzeitig sämtliche oberhalb der Siegelschicht angeordneten Schichten mit ab, mithin die komplette Dichtscheibe mit einem Zug. Der Behälter ist somit geöffnet.

Die Dicke der Schicht aus dem wärmedämmenden Material, insbesondere also aus dem geschäumten Kunststoff liegt bevorzugt zwischen 50 µm und 300 µm. Besonders bevorzugt ist es, wenn sie zwischen 90 µm und 200 µm liegt. Noch weiter bevorzugt ist es, wenn sie zwischen 110 µm und 130 µm liegt.

Diese Abmessungen haben ein besonders geschicktes und günstiges Verhältnis der verschiedenen Anforderungen zueinander ergeben. So wächst mit der Dicke der wärmedämmenden Schicht natürlich auch die Dicke der Grifflasche, die auf die anderen Schichten umgelegt ist und diese Dicke muss entsprechend im Behälterverschluss berücksichtigt werden. Andererseits wächst mit zunehmender Dicke auch die erreichte Wärmedämmung und damit der gewünschte Effekt, dass die Siegelschicht keine erhöhte Temperatur mehr annimmt. Schließlich sind auch weitere Eigenschaften wie etwa die Reißfestigkeit der Grifflasche, die Handhabbarkeit des gesamten Systems und auch die Kosten für die Dichtscheibe samt Grifflasche zu berücksichtigen, die sich ebenfalls optimiert bei diesen Werten wiederfinden.

Besonders bevorzugt ist es, wenn die oberste Schicht aus einem reißfesten, zugleich aber leichtgewichtigen Material wie insbesondere Polyethylenterephthalat (PET) besteht. Schichten aus diesem Material erhöhen die Reißfestigkeit. Dies ist nicht nur im Zusammenhang mit der Grifflasche sinnvoll, sondern erhöht die Reißfestigkeit des Schichtenverbundes mit der metallischen, insbesondere aus Aluminium bestehenden Schicht erheblich. Die Aluminiumschicht als solche ist meist nicht besonders reißfest, so dass das Verbinden mit einer solchen dünnen reißfesten PET-Schicht auch in anderem Zusammenhang von Vorteil ist.

Damit der Verbraucher und Benutzer die Grifflasche auch sofort erkennt, kann sie farblich oder auch in anderer Form so gestaltet sein, dass sie sich von den darunter liegenden Schichten optisch oder in anderer Form deutlich abhebt. Besonders einfach kann man dies gestalten, in dem man die Grifflasche in einer auffallenden Signalfarbe einfärbt, etwa in der Firmenfarbe des Herstellers des Behälterinhalts, und/oder in dem man die Grifflasche mit dem Firmenlogo oder der Marke bedruckt.

Die Größe der Grifflasche ist weniger kritisch als bei herkömmlichen Konzepten, da keine Gefahr mehr besteht, dass sie die Funktion des Schraubgewindes des Schraubdeckels stört.

Die Grifflasche kann also bis in die Mitte der Dichtscheibe ragen oder auch komplizierte oder ergonomisch und haptisch angenehme Formen besitzen.

Denkbar wäre es sogar, die Grifflasche eine Form annehmen zu lassen, die entweder mit dem Produkt selbst einen sinnvollen Zusammenhang besitzt, also beispielsweise die stilisierte Form einer Tomate, einer Kaffeetasse oder eines Gebäckstücks besitzt oder ihrerseits selbst die Form eines Firmenlogos annimmt.

Greift der Benutzer nun diese Lasche an, die auf der ihr benachbarten und nun obersten Schicht nicht aufgeklebt oder sonst befestigt ist, so kann der Benutzer an der Lasche die noch vorhandenen gesamten Schichten der Dichtscheibe von der Behältermündung durch eine entsprechende handhabbare Kraftausübung abziehen und so die Versiegelung aufbrechen. Das Ziehen an der Lasche zieht sämtliche Schichten auf einmal ohne eine zusätzliche Manipulation nach oben und ohne dass die Gefahr besteht, dass durch den Zug an der Lasche nicht alle Schichten mit einem Zugriff und auf einen Zug hin mit angehoben werden.

In einer bevorzugten Ausführungsform ist außerdem vorgesehen, dass zwischen der Siegelschicht und der metallischen durch Induktion erwärmbaren Schicht eine Schicht aus einem Polyestermaterial angeordnet ist.

Eine solche Schicht hat mehrere vorteilhafte Effekte.

Zum Einen ist sie insbesondere geeignet, Dichtscheiben auch für Behälterinhalte wie etwa Tomatenketchup brauchbar zu machen, da sie dadurch resistent gegenüber der in Tomatenketchup vorhandenen Säure sind **und somit die Haltbarkeit von verschlossenen Behältern gefüllt mit** Tomatenketchup steigern können.

Wird diese Schicht zwischen der Induktionsschicht und der Siegelschicht angeordnet, schützt sie die gesamte Dichtscheibe gegenüber dem Behälterinneren. Die noch dazwischenliegende Siegelschicht ist hier unerheblich, da diese zu diesem Zeitpunkt ihre Siegelungseigenschaft bereits auf dem Rand der Behältermündung erfüllt hat.

Neben dieser Schutzwirkung hat auch diese Schicht aus Polyestermaterial den Effekt, bis in die Grifflasche hineinzuragen und dadurch beim Umlegen der Grifflasche auf die oberste Schicht der Dichtscheibe zwischen die nun ganz oben liegende Siegelschicht und die weit unten liegende metallische Induktionsschicht zu treten und die Wärmeleitung weiter zu reduzieren.

Die vorliegend beschriebene Dichtscheibe ist insbesondere für sogenannte Dispenser geeignet, wie sie etwa für Tomatenketchup oder Remoulade häufig verwendet werden. Die Dichtscheiben sind einteilig und weisen im Allgemeinen kein sogenannten Resealteil auf.

Oberhalb der obersten Schicht kann man in einer anderen Ausführungsform ein Reseal-Teil anordnen. Hierzu würde man eine Trägerschicht oder Schaumschicht vorsehen, die bei dem Aufschraubvorgang in der Schraubkappe verbleibt und beim Wiederverschließen für die Abdichtung für einen bestimmten Zeitraum sorgt.

Im Allgemeinen wird hier eine klebende Trennschicht oberhalb der obersten Schicht und unterhalb des Reseal-Teils angeordnet werden, die fest genug ist, um die Dichtscheibe im Ruhezustand zusammenzuhalten, jedoch nur so fest ist, dass bei einem Aufschraubvorgang die Bindung gerade an dieser Stelle aufgehoben wird.

Die Grifflasche wird bei dieser Ausführungsform gefaltet und in Richtung der Achse der kreisförmigen Dichtscheibe umgelegt. Die klebende Trennschicht befindet sich also oberhalb dieser Lasche.

Weitere bevorzugte Merkmale sind in den Unteransprüchen angegeben.

Eine Herstellung dieser erfindungsgemäßen Dichtscheibe ist bevorzugt mit einem Verfahren möglich, dass ähnlich zu dem in der DE 10 2007 014 084 B3 vorgeschlagenen Verfahren arbeitet.

Im Folgenden wird anhand der Zeichnung ein Ausführungsbeispiel der Erfindung näher dargestellt. Es zeigen:
- **Figur 1**: einen schematischen Schnitt durch eine Ausführungsform der Erfindung;
- **Figur 2**: einen schematischen Schnitt durch diese Ausführungsform der Erfindung nach Umlegung einer Lasche.

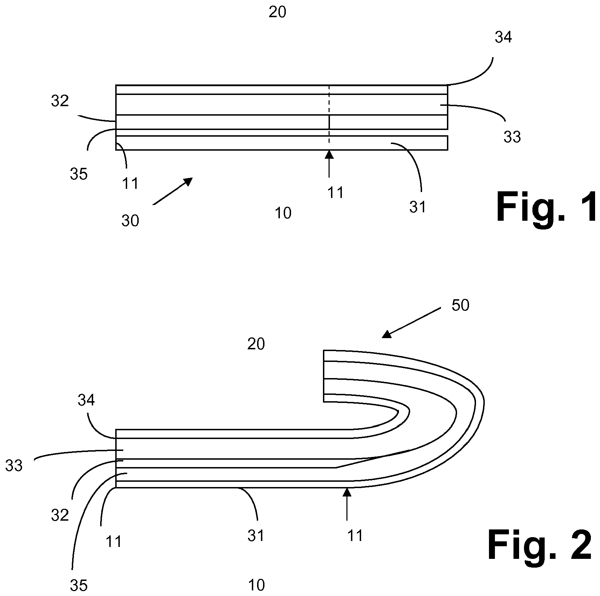

In der **Figur 1** sind nicht dargestellt und lediglich durch ihre Bezugszeichen angedacht ein Behälter 10 und ein Deckel 20 vorzustellen. Der Behälter 10 ist beispielsweise eine Flasche für Tomatenketchup oder ein aromadicht zu verschließender Glasbehälter für Pulverkaffee oder auch ein anderes Aufnahmegefäß. Eine Mündung dieses Behälters 10 besitzt einen Rand 11, welcher ebenfalls nur hinsichtlich seiner Position angedeutet ist. Die Mündung 11 des Behälters ist üblicherweise kreisförmig und eben.

Ein Deckel 20 dient dazu, diese Mündung 11 des Behälters 10 zu verschließen.

Zu diesem Zweck dient eine Dichtscheibe, die in der Figur 1 in einem Querschnitt während eines Herstellungsvorganges dargestellt ist.

Diese Darstellung der Dichtscheibe dient zur Verdeutlichung und ist lediglich schematisch zu verstehen. Sie zeigt, dass die Dichtscheibe aus einer Gruppe 30 von mehreren Schichten besteht. Die Gruppe 30 ist von den Abmessungen her flächenmäßig so groß, dass sie zum Abdecken der Mündung 11 des Behälters 10 genau passt. Lediglich in einem Teilbereich, der gerade in der Schnittdarstellung in der Figur 1 zu sehen ist, ragen Teile einiger Schichten der Gruppe 30 aus Schichten über den Rand der Mündung 11 hinaus, was noch im Folgenden näher erläutert wird.

Die Dichtscheibe 30 weist als unterste Schicht eine Siegelschicht 31 auf. Diese Siegelschicht liegt auf dem Rand der Mündung 11 des Behälters 10 auf.

Als zweite Schicht folgt eine Schicht 35 aus einem Polyestermaterial. Diese Schicht ist gegenüber beispielsweise einer Säure resistent, die im Inneren des Behälters 10 Teil des dortigen, verpackten Produktes ist, beispielsweise von Tomatenketchup.

Es folgt dann als dritte Schicht eine metallische, durch Induktion erwärmbare Schicht 32. Wenn der Behälter 10 mit der Dichtscheibe verschlossen werden soll, wird die Dichtscheibe mit der Gruppe 30 von Schichten auf die Mündung 11 des Behälters 10 gelegt. Danach wird induktiv ein Strom in die metallische durch Induktion erwärmbare Schicht 32 induziert und diese dadurch erwärmt. Durch Wärmeleitung werden die angrenzenden Schichten und auch die darauffolgende Siegelschicht 31 ebenfalls erwärmt. Diese wird dadurch weich und verschmilzt im Bereich des Randes der Mündung 11 mit dem Material des Behälters 10 beziehungsweise schmilzt auf diesem auf. Erkaltet die metallische Schicht 32, so kühlt sich auch die Siegelschicht 31 wieder ab und wird fest, so dass damit auch die gesamte Dichtscheibe mit der Gruppe 30 aus Schichten auf der Mündung 11 des Behälters 10 festgesiegelt ist.

Auf die Induktionsschicht 32 folgt nach oben, also in Richtung weg von der Mündung 11 der Behälter 10, als weitere Schicht eine Schicht 33 aus einem wärmedämmendem Material, insbesondere aus einem Kunststoffschaum. Diese abgekürzt als Schaumschicht bezeichnete Schicht 33 ist in gewissem Maße elastisch und ist damit in der Lage, geringfügige Unebenheiten, die bei der Herstellung der Behältermündung 11 oder der Herstellung des Deckels 20 entstehen, auszugleichen.

Die Schaumschicht 33 besteht insbesondere aus einem geschäumten Kunststoff. Besonders bevorzugt handelt es sich dabei um eine Schicht aus expandiertem Polyethylen (EPE). Dieser Werkstoff hat insbesondere auch den Vorteil eines besonders geringen Gewichtes und den Vorteil, auch gegenüber Belastungen etwa durch Stoß oder Druck einen Schutz zu bieten.

Oberhalb der Schaumschicht 33 befindet sich eine Kunststoffschicht 34, die in der dargestellten Ausführungsform auch die oberste Schicht der Gruppe 30 der Schichten der Dichtscheibe ist. Bevorzugt besteht diese oberste Schicht aus Polyethylenterephthalat (PET). Dieser Werkstoff ist besonders gut bedruckbar und einfärbbar und ermöglicht es daher, auch optisch ein ansprechendes Äußeres durch die Wiedergabe auf der obersten Schicht anzubieten.

Auf diese Kunststoffschicht 34 kann beispielsweise ein Bild aufgedruckt werden (nicht dargestellt). Diese Schicht ist es, die der Benutzer nach dem Abnehmen des Deckels 20 von der Mündung 11 des Behälters 10 vor sich hat. Man kann hier also beispielsweise sehr geeignet eine Marke des Behälterherstellers beziehungsweise des Herstellers des Behälterinhaltes aufdrucken. Alternativ können hier auch Hinweise für das weitere Vorgehen gegeben werden oder auch eine attraktive Gestaltung, die etwas über den Inhalt des Behälters 10 selbst aussagt, beispielsweise über dessen Geschmacksrichtung oder Verwendungszweck.

Die Dichtscheibe mit der Gruppe 30 aus Schichten aus der Figur 1 ist so noch nicht fertig, hierzu ist **Figur 2** zur Verdeutlichung ergänzt.

Auch hier sieht man wiederum den Behälter 10 mit seiner Mündung 11 und den Deckel 20 lediglich angedeutet. In rein schematischer und stark vergrößerter Form ist gezeigt, dass diejenigen Abschnitte der Schichten der Gruppe 30, die den Rand der Mündung 11 des Behälters 10 nach außen überragen, nach innen umgefaltet sind oder werden. Dieser Bereich bildet eine Grifflasche 50. Die Grifflasche 50 wird flach auf die oberste Schicht 34 der Gruppe 30 der Schichten gelegt und steht also nicht über, wie in der vergrößerten Darstellung in der Figur 2 angenommen werden könnte.

Es ist also möglich, den Deckel 20 auf die Mündung 11 des Behälters 10 aufzusetzen und aufzuschrauben, ohne dass die Grifflasche 50 in den Windungen eines Schraubgewindes stört. Die Schichten sind natürlich wesentlich flacher im Verhältnis zum Durchmesser der Mündung 11 des Behälters 10.

Der Benutzer sieht mithin eine Grifflasche 50 vor der Fläche der obersten Schicht 34, er greift die Grifflasche 50, hebt sie an und zieht an der Grifflasche 50. Durch die Ausübung dieser Kraft wird die Siegelungskraft der Siegelschicht 31 auf dem Rand der Mündung 11 des Behälters 10 überwunden und die Gruppe 30 der Schichten löst sich an dieser Stelle von dem Rand der Mündung 11. Durch weiteres Ziehen an der Grifflasche 50 nach oben löst sich dann sukzessive der weitere aufgesiegelte kreisförmige Bereich, mit dem die Siegelschicht 31 auf dem Rand der Mündung 11 des Behälters 10 festgesiegelt ist. Schließlich kann der Benutzer die gesamte Dichtscheibe mit allen Bestandteilen mittels der Grifflasche 50 abziehen und entsorgen.

Besonderes Augenmerk sei dabei auf die Schicht 32 gelegt. Die metallische oder Induktionsschicht 32 endet im Gegensatz zu allen anderen Schichten in der dargestellten Ausführungsform ringsum am Rand der Mündung 11. Man kann dies in der Figur 1 durch das Fehlen der Schicht 32 in dem Bereich rechts von dem Rand der Mündung 11 erkennen; in der Figur 2 ist rein schematisch auch ein Enden der Schicht 32 in diesem Bereich angedeutet. Da die Schichten alle sehr dünn im Verhältnis zu ihren Flächenabmessungen sind, sind die in der Figur 2 zu erkennenden Stufen in der Praxis ohne Bedeutung. Diese Stufe wird beispielsweise von der Siegelschicht 31 oder auch von der Schaumschicht 33 problemlos ausgefüllt.

Das Weglassen der metallischen Schicht 32 in dem Bereich der Grifflasche 50 führt zu einem gravierenden Vorteil. Während des Induktionsversiegelungsvorganges der Dichtscheibe mit der Siegelschicht 31 auf dem Rand der Mündung 11 des Behälters 10 tritt nämlich herkömmlich eine Schwierigkeit dadurch auf, dass durch die umgelegte Grifflasche gerade in dem Flächenbereich der Grifflasche 50 eine doppelte metallische Schicht vorhanden ist. Dies führt dazu, dass die Induktion nicht sauber verläuft, da in zwei metallische, übereinander liegende Flächenabschnitte Strom induziert wird und mithin im unteren Bereich Abschirmungseffekte auftreten. Dies führt dazu, dass gerade im Bereich der Grifflasche 50 der entsprechende Abschnitt des Randes der Mündung 11 des Behälters 10 nicht ordnungsgemäß von der Siegelschicht 31 versiegelt wird, da diese nicht in dem gleichen Temperaturbereich aufschmilzt, wie auf den anderen Umfangsbereichen des Randes der Mündung 11.

Dies wird bei den herkömmlichen Dichtscheiben auch nicht ausgeglichen, sondern nur verkompliziert dadurch, dass stattdessen gerade im Bereich der Grifflasche nun zwei Flächenabschnitte der metallischen Schicht 32 von der Induktionsvorrichtung beaufschlagt werden. Dies verkompliziert eher die Bemühungen, etwa durch geschickte technische Kniffe, die zuerst genannte Störung behelfsmäßig zu kaschieren, etwa durch eine nicht parallel zur Fläche der Dichtscheibe gestellte Induktionsvorrichtung.

Erfindungsgemäß aber tritt diese doppelte Fläche der metallischen Schicht 32 auf dem Mündungsbereich des Behälters 10 nicht auf. Die metallische Schicht ist definiert nur in einer Lage oben auf der Mündung 11 des Behälters 10 vorgesehen und wird von beliebigen Biegungen oder sonstigen Maßnahmen der Grifflasche 50 nicht beeinträchtigt oder beeinflusst.

Eine Herstellung einer solchen Dichtscheibe mit einer Grifflasche, die nicht alle Schichten beinhaltet, kann etwa wie in der DE 10 2007 014 084 B3 vorgenommen werden, natürlich mit einer entsprechend geänderten Wahl der jeweils zu behandelnden Schichtgruppen.

Wie man insbesondere in der Figur 2 erkennen kann, befindet sich nun ein Abschnitt der Siegelschicht 31 unten, dort wo er zum Aufsiegeln zum Verschließen der Behältermündung auch benötigt wird. Aufgrund der umgeklappten Grifflasche 50 befindet sich nun aber auch ein weiterer Abschnitt der Siegelschicht 31 eben auf der Fläche dieser Grifflasche 50 und weist nun nach oben. Dies führt bei herkömmlichen Dichtscheiben zu Problemen, da nun bei einem Induktionsversiegelungsvorgang diese Siegelschicht 31 nicht nur wie gewollt unten auf der Behältermündung ihre Klebwirkung entfaltet, sondern auch oben im Bereich der Grifflasche, wo diese ungewollt und ungewünscht an den darüberliegenden Bereichen ansiegelt, also an der Unterseite der Schraubkappe 20.

Wie man in der Figur 2 im Schnitt aber auch sieht, liegt die metallische Schicht 32 praktisch unmittelbar auf der Siegelschicht 31 im Bereich der Behältermündung auf. Eine in die metallische Schicht 32 induzierte Wärme wird daher durch Wärmeleitung fast ungeschmälert in die Siegelschicht 31 geleitet und kann daher deren Temperatur so erhöhen, dass die beabsichtigte Klebwirkung auf dem Rand der Behältermündung 11 eintritt.

Demgegenüber liegt nun zwischen der metallischen Schicht 32 und dem Abschnitt der Siegelschicht 31 auf der Grifflasche 50 ein wesentlich größerer Abstand. Insbesondere liegen hier gleich zwei Lagen der Schaumschicht 33 zwischen der metallischen Schicht 32 und der Siegelschicht 31 oben auf der Grifflasche 50. Hinzu kommt möglicherweise auch noch eine Lage der Schicht 35.

Dies bedeutet, dass die Wärmeleitung bei dem Vorgang der Induktionsversiegelung drastisch reduziert ist. Die beiden Lagen der Schaumschicht 33 wirken gewissermaßen als Wärmedämmung und sorgen dafür, dass die induzierte Wärme nur in wesentlich geringerem Maße bis in diesen Bereich der Siegelschicht 31 oben auf der Grifflasche 50 kommt.

Diese drastische Reduzierung führt nun dazu, dass der Temperaturanstieg in diesem Abschnitt der Siegelschicht 31 nur so gering ausfällt, dass die Klebwirkung der Siegelschicht 31 nicht entfaltet wird und somit auch kein Ankleben der Grifflasche 50 an der Unterseite des Deckels 20 erfolgt.

Für den Benutzer ändert sich durch die spezielle Ausgestaltung der Grifflasche 50 nichts.

Besonders bevorzugt ist es, wenn der Benutzer die Grifflasche 50 vor dem Hintergrund der obersten Schicht 34 der Dichtscheibe besonders gut erkennen kann, die Grifflasche also auf ihrer dem Betrachter zugewandten Seite eine andere Färbung aufweist, als die oberste Schicht 34. Dabei ist zu beachten, dass die dem Benutzer zugewandte obere Seite der Grifflasche 50 die Siegelschicht 31 beziehungsweise die darunter liegende Schaumschicht 33 ist, sofern die Siegelschicht transparent ist.

Besonders bevorzugt ist es außerdem, wenn auch die erst nach dem Auffalten der Grifflasche 50 sichtbare, von der obersten Schicht 34 gebildete Seite der Grifflasche 50 für den Benutzer und Betrachter einen originellen Anblick bietet.

Dadurch lässt sich für den Benutzer insbesondere leicht erkennen, wozu er die Grifflasche jetzt benutzen soll und dass diese etwa zum Anfassen beim anschließenden Abziehen der Dichtscheibe dient.

So hat es sich etwa als geeignet herausgestellt, auf der Oberseite der obersten Schicht 34 der Dichtscheibe eine Tomate mit einem Stiel abzubilden, wobei der Stiel im Bereich der Grifflasche 50 abgebildet wird. Diese Darstellung wäre etwa für einen Behälter mit Tomatenketschup als Füllgut geeignet.

Nicht dargestellt ist in den Figuren 1 und 2 eine weitere Ausführungsform. So ist es grundsätzlich möglich, zusätzlich auch ein sogenanntes Reseal-Teil vorzusehen. Dies sind weitere Schichten, die dann oberhalb der Gruppe 30 und auch oberhalb der umgelegten Grifflasche 50 die Dichtscheibe bilden. Dieses sogenannte Reseal-Teil verbleibt beim Abnehmen des Deckels 20 in diesem und verbessert beim Wiederaufsetzen des Deckels nach dem Abziehen des Gruppe 30 von Schichten durch Aufliegen auf dem Rand der Mündung 11 des Behälters 10 die Abdichtung.

Solche Reseal-Teile sind allerdings nicht für alle Füllgüter erwünscht oder erforderlich, können aber auch bei der Erfindung entsprechend vorgesehen werden.

### Bezugszeichenliste

- 10: Behälter
- 11: Mündung des Behälters 10
- 20: Deckel des Behälters 10
- 30: Gruppe von Schichten
- 31: Siegelschicht
- 32: metallische, durch Induktion erwärmbare Schicht
- 33: Schicht aus wärmedämmendem Material, insbesondere aus Kunststoffschaum, verkürzt auch Schaumschicht genannt
- 34: oberste Schicht der Gruppe 30
- 35: Schicht aus Polyestermaterial

## Patentansprüche

1. Dichtscheibe für einen Behälterverschluss zur Verwendung bei einem Behälter (10) mit einer durch einen umlaufenden Rand begrenzten Mündung (11),
bei der die Dichtscheibe aus mehreren Schichten mit einem Rand besteht, von denen zumindest eine Gruppe (30) aus Schichten (31, 32, 33, 34, 35) die Mündung (11) des Behälters (10) vor einer Erstöffnung des Behälters (10) dicht verschließt,
bei der eine der Schichten eine metallische, durch Induktion erwärmbare Schicht (32) ist,
bei der die anderen Schichten (31, 33, 34, 35) nichtmetallische, durch Induktion nicht unmittelbar erwärmbare Schichten sind,
bei der die Gruppe (30) der Schichten mittels einer Siegelschicht (31) auf dem umlaufenden Rand der Mündung (11) aufsiegelbar ist,
bei der die Dichtscheibe zumindest eine Grifflasche (50) aufweist,
bei der die Grifflasche (50) nur von einer oder mehreren der Schichten aus der Gruppe (30) der Schichten gebildet wird, und
bei der die die Grifflasche (50) bildenden Schichten (31, 33, 34,35) den Rand der anderen Schicht (32) der Gruppe (30) flächenmäßig um die Fläche der Grifflasche (50) überragen,
**dadurch gekennzeichnet,**
**dass** eine andere aus der Gruppe (30) der Schichten eine Schicht (33) aus wärmedämmendem Material ist,
**dass** die Schicht (33) aus wärmedämmendem Material eine Schicht aus geschäumtem Kunststoff ist,
**dass** diese Schicht (33) so ausgebildet ist, dass die in der metallischen, durch Induktion erwärmbaren Schicht (32) erzeugte Wärmeenergie nicht ausreicht, nach Hindurchtreten durch zwei Lagen der wärmedämmenden Schicht (33) in der Siegelschicht (31) ein Festkleben und Ansiegeln der Siegelschicht (31) an einem darüber liegenden Element des Verschlusses des Behälters (10) zu bewirken,
**dass** die Grifflasche (50) nur von dieser Schicht (33) aus wärmedämmendem Material oder von dieser Schicht (33) und einer oder mehreren der anderen, nichtmetallischen und durch Induktion nicht unmittelbar erwärmbaren Schichten (31, 33, 34) gebildet wird, und
**dass** die Grifflasche (50) gefaltet und auf die oberste Schicht (35) der Gruppe (30) aus Schichten (31, 32, 33, 34, 35) umgelegt ist.

2. Dichtscheibe nach Anspruch 1,
**dadurch gekennzeichnet,**
**dass** die Schicht (33) aus geschäumtem Kunststoff aus einem Schaumstoff aus expandiertem Polyethylen (EPE-Schaum) gebildet ist.

3. Dichtscheibe nach einem der vorstehenden Ansprüche,
**dadurch gekennzeichnet,**
**dass** die Schicht (33) aus wärmedämmendem Material auf der von der Siegelschicht (31) abgewandten Seite der metallischen, durch Induktion erwärmbaren Schicht (32) angeordnet ist.

4. Dichtscheibe nach einem der vorstehenden Ansprüche,
**dadurch gekennzeichnet,**
**dass** die Dicke der Schicht (33) aus wärmedämmendem Material, insbesondere aus geschäumtem Kunststoff, zwischen 50 µm und 300 µm, insbesondere zwischen 90 µm und 200 µm und weiter bevorzugt zwischen 110 µm und 130 µm beträgt.

5. Dichtscheibe nach einem der vorstehenden Ansprüche,
**dadurch gekennzeichnet,**
**dass** die Siegelschicht (31) sich über die Fläche der Grifflasche (50) erstreckt.

6. Dichtscheibe nach einem der vorstehenden Ansprüche,
**dadurch gekennzeichnet,**
**dass** zwischen der Siegelschicht (31) und der metallischen durch Induktion erwärmbaren Schicht (32) eine Schicht (35) aus einem Polyestermaterial angeordnet ist.

7. Dichtscheibe nach Anspruch 6,
**dadurch gekennzeichnet,**
**dass** die Schicht (35) aus Polyestermaterial eine Dicke zwischen 12 µm und 36 µm aufweist.

8. Dichtscheibe nach einem der vorstehenden Ansprüche,
**dadurch gekennzeichnet,**
**dass** die oberste Schicht (34) der Gruppe (30) der Schichten aus Polyethylenterephthalat (PET) besteht.

9. Dichtscheibe nach einem der vorstehenden Ansprüche,
**dadurch gekennzeichnet,**
**dass** die oberste Schicht (34) der Gruppe (30) der Schichten mit einem Bild versehen ist.

10. Dichtscheibe nach Anspruch 9,
**dadurch gekennzeichnet,**
**dass** das Bild eine auf den Inhalt des Behälters (10) hinweisende Darstellung ist.

11. Dichtscheibe nach Anspruch 9 oder 10,
**dadurch gekennzeichnet,**
**dass** das Bild auch die nach dem Auffalten sichtbare Oberseite der Grifflasche (50) einnimmt.

12. Dichtscheibe nach einem der Ansprüche 9 bis 11,
**dadurch gekennzeichnet,**
**dass** das Bild die besondere Bedeutung der Grifflasche (50) hervorhebt, beispielsweise durch die Darstellung einer Tomate mit einem Stiel auf der Grifflasche (50).

13. Dichtscheibe nach einem der vorhergehenden Ansprüche,
**dadurch gekennzeichnet,**
**dass** die Gruppe (30) der Schichten lösbar mit einer weiteren Gruppe aus oberen Schichten der Dichtscheibe verbunden ist,
**dass** mit der weiteren Gruppe aus oberen Schichten die Mündung (11) des Behälters (10) erneut vorübergehend verschließbar ist, und
**dass** die auf die Schicht (34) umgelegte Grifflasche (50) von der Gruppe der oberen Schichten abgedeckt ist, so dass die Grifflasche (50) nach der Lösung der Gruppe der oberen Schichten für die Erstöffnung des Behälters (10) greifbar ist.

## Claims

1. Sealing disc for a container closure for use with a container (10) having a mouth (11) delimited by a circumferential edge,
in which the sealing disc is composed of a plurality of layers with an edge, of which at least one group (30) of layers (31, 32, 33, 34, 35) tightly closes the mouth (11) of the container (10) before the container (10) is opened for the first time,
in which one of the layers is a metallic layer (32) that can be heated by induction,
in which the other layers (31, 33, 34, 35) are non-metallic layers that are unable to be heated directly by induction,
in which the group (30) of layers can be sealed onto the circumferential edge of the mouth (11) by means of a sealing layer (31),
in which the sealing disc has at least one grip tab (50),
in which the grip tab (50) is formed by only one or more of the layers from the group (30) of layers, and
in which the layers (31, 33, 34, 35) forming the grip tab (50) project beyond the edge of the other layer (32) of the group (30) in terms of area around the surface of the grip tab (50),
**is hereby characterized,**
**in that** another of the group (30) of layers is a layer (33) of thermally insulating material,
**in that** the layer (33) of thermally insulating material is a layer of foamed plastic,
**in that** this layer (33) is designed in such a way that the thermal energy generated in the metallic layer (32), which can be heated by induction, is not sufficient to cause the sealing layer (31) to stick and seal the sealing layer (31) to an element of the closure of the container (10) located above it after passing through two layers of the thermally insulating layer (33) in the sealing layer (31),
**in that** the grip tab (50) is formed only by this layer (33) of thermally insulating material or by this layer (33) and one or more of the other, non-metallic layers (31, 33, 34) which are unable to be directly heated by induction, and
**in that** the grip tab (50) is folded and doubled over onto the uppermost layer (35) of the group (30) of layers (31, 32, 33, 34, 35).

2. Sealing disc according to claim 1,
**characterized by this,**
in **that** the layer (33) of foamed plastic is formed from a foam of expanded polyethylene (EPE foam).

3. Sealing disc according to one of the above claims,
**characterized by this,**
in **that** the layer (33) of thermally insulating material is arranged on the side of the metallic layer (32), which can be heated by induction, that is remote from the sealing layer (31).

4. Sealing disc according to one of the above claims,
**characterized by this,**
in **that** the thickness of the layer (33) of heat-insulating material, in particular of foamed plastic, is between 50 µm and 300 µm, in particular between 90 µm and 200 µm and further preferably between 110 µm and 130 µm.

5. Sealing disc according to one of the above requirements,
**characterized by this,**
**that** the sealing layer (31) extends over the surface of the grip tab (50).

6. Sealing disc according to one of the above claims,
**characterized by this,**
in **that** a layer (35) of a polyester material is arranged between the sealing layer (31) and the metallic layer (32) which can be heated by induction.

7. Sealing disc according to claim 6,
**characterized by this,**
**that** the layer (35) of polyester material has a thickness between 12 µm and 36 µm.

8. Sealing disc according to one of the above claims,
**characterized by this,**
in **that** the uppermost layer (34) of group (30) of the layers consists of polyethylene terephthalate (PET)

9. Sealing disc according to one of the above claims,
**characterized by this,**
**that** the uppermost layer (34) of the group (30) of layers is provided with an image.

10. Sealing disc according to claim 9,
**characterized by this,**
**that** the image is a representation indicating the contents of the container (10).

11. Sealing disc according to claim 9 or 10,
**characterized by this,**
**that** the image also occupies the top side of the grip tab (50) visible after unfolding.

12. Sealing disc according to one of the claims 9 to 11,
**characterized by this,**
**that** the picture emphasizes the special importance of the grip tab (50), for example by showing a tomato with a stalk on the grip tab (50).

13. Sealing disc according to one of the previous claims,
**characterized by this,**
**that** the group (30) of layers is detachably connected to another group of upper layers of the sealing disc,
that with the further group of upper layers the mouth (11) of the container (10) can be temporarily closed again, and
in **that** the grip tab (50) doubled over the layer (34) is covered by the group of the upper layers, so that the grip tab (50) can be gripped for the initial opening of the container (10) after detachment of the group of the upper layers.

## Revendications

1. Rondelle d'étanchéité pour une fermeture de contenant à utiliser dans le cas d'un contenant (10) avec une embouchure (11) délimitée par un bord périphérique,
où la rondelle d'étanchéité est constituée de plusieurs couches avec un bord, dont au moins un groupe (30) composé de couches (31, 32, 33, 34, 35) ferme de manière étanche l'embouchure (11) du contenant (10) devant une première ouverture du contenant (10),
où une des couches est une couche (32) métallique pouvant être réchauffée par induction,
où les autres couches (31, 33, 34, 35) sont des couches non métalliques, ne pouvant pas être réchauffées directement par induction,
où le groupe (30) des couches peut être scellé sur le bord périphérique de l'embouchure (11) au moyen d'une couche de scellement (31),
où la rondelle d'étanchéité présente au moins une languette de préhension (50),
où la languette de préhension (50) est formée seulement par une ou plusieurs des couches issues du groupe (30) des couches, et
où les couches (31, 33, 34, 35) formant la languette de préhension (50) dépassent du bord de l'autre couche (32) du groupe (30) en termes de surface de la surface de la languette de préhension (50),
**caractérisée en ce**
**qu'**une autre issue du groupe (30) des couches est une couche (33) composée d'un matériau d'isolation thermique, que la couche (33) composée d'un matériau d'isolation thermique est une couche composée de matière plastique expansée,
**que** ladite couche (33) est réalisée de telle sorte que l'énergie thermique produite dans la couche (32) métallique pouvant être réchauffée par induction ne suffit pas pour entraîner après avoir traversé deux strates de la couche (33) d'isolation thermique dans la couche de scellement (31) une fixation par collage et un scellement de la couche de scellement (31) sur un élément situé au-dessus de la fermeture du contenant (10),
**que** la languette de préhension (50) est formée seulement par ladite couche (33) composée d'un matériau d'isolation thermique ou par ladite couche (33) et une ou plusieurs des autres couches (31, 33, 34) non métalliques et ne pouvant pas être réchauffées directement par induction, et
**que** la languette de préhension (50) est dépliée et est répartie sur la couche la plus haute (35) du groupe (30) composé de couches (31, 32, 33, 34, 35).

2. Rondelle d'étanchéité selon la revendication 1, **caractérisée en ce**
**que** la couche (33) composée d'une matière plastique expansée est formée à partir d'une mousse composée de polyéthylène expansé (mousse EPE).

3. Rondelle d'étanchéité selon l'une quelconque des revendications précédentes,
**caractérisée en ce**
**que** la couche (33) composée d'un matériau d'isolation thermique est disposée sur le côté, opposé à la couche de scellement (31), de la couche (32) métallique pouvant être réchauffée par induction.

4. Rondelle d'étanchéité selon l'une quelconque des revendications précédentes,
**caractérisée en ce**
**que** l'épaisseur de la couche (33) composée de matériau d'isolation thermique, en particulier composée de matière plastique expansée, est comprise entre 50 µm et 300 µm, en particulier entre 90 µm et 200 µm et de manière davantage préférée entre 110 µm et 130 µm.

5. Rondelle d'étanchéité selon l'une quelconque des revendications précédentes,
**caractérisée en ce**
**que** la couche de scellement (31) s'étend sur la surface de la languette de préhension (50).

6. Rondelle d'étanchéité selon l'une quelconque des revendications précédentes,
**caractérisée en ce**
**qu'**une couche (35) composée d'un matériau à base de polyester est disposée entre la couche de scellement (31) et la couche (32) métallique pouvant être réchauffée par induction.

7. Rondelle d'étanchéité selon la revendication 6, **caractérisée en ce**
**que** la couche (35) composée de matériau à base de polyester présente une épaisseur entre 12 µm et 36 µm.

8. Rondelle d'étanchéité selon l'une quelconque des revendications précédentes,
**caractérisée en ce**
**que** la couche la plus haute (34) du groupe (30) des couches est constituée de polytéréphtalate d'éthylène (PET).

9. Rondelle d'étanchéité selon l'une quelconque des revendications précédentes,
**caractérisée en ce**
**que** la couche (34) la plus haute du groupe (30) des couches est pourvue d'une image.

10. Rondelle d'étanchéité selon la revendication 9, **caractérisée en ce**
**que** l'image est une représentation attirant l'attention sur le contenu du contenant (10).

11. Rondelle d'étanchéité selon la revendication 9 ou 10, **caractérisée en ce**
**que** l'image adopte également le côté supérieur, visible après le dépliage de la languette de préhension (50).

12. Rondelle d'étanchéité selon l'une quelconque des revendications 9 à 11,
**caractérisée en ce**
**que** l'image souligne l'importance spécifique de la languette de préhension (50), par exemple en représentant une tomate avec une tige sur la languette de préhension (50).

13. Rondelle d'étanchéité selon l'une quelconque des revendications précédentes,
**caractérisée en ce**
**que** le groupe (30) des couches est relié de manière amovible à un autre groupe composé de couches supérieures de la rondelle d'étanchéité,
**que** l'embouchure (11) du contenant (10) peut être à nouveau temporairement fermée avec l'autre groupe composé de couches supérieures, et
**que** la languette de préhension (50) répartie sur la couche (34) est recouverte par le groupe des couches supérieures si bien que la languette de préhension (50) peut être saisie après le desserrage du groupe des couches supérieures pour la première ouverture du contenant (10).
